# EUROPEAN PATENT APPLICATION

(11) **EP 3 719 727 A1**
(43) Date of publication of application: **07.10.2020**
(21) Application number: 19167451.4
(22) Date of filing: 04.04.2019
(51) Int. Cl.: G06Q 20/22, G06Q 20/02, G06Q 20/20, G06Q 20/32, G06Q 20/40

(54) **TRANSACTION SELECTION MECHANISM**

(71) Applicant: Mastercard International Incorporated, New York, NY 10577 (US)
(72) Inventor: SMETS, Patrik, 2560 Nijlen (BE)
(74) Representative: Lawrence, Richard Anthony

(57) **Abstract**

A method of transaction selection is described for a transaction conducted between a user computing device adapted for use as a payment device and a terminal. The user computing device supports a plurality of payment cards. Steps at the user computing device include the following: establishing communication with the terminal; receiving transaction related information from the terminal; performing a card selection operation using the transaction related information to select a preferred payment card for performing the transaction; and identifying to the terminal preferred applications for performing the transaction based on the preferred payment card. An associated method of card selection is described, along with corresponding steps performed at the terminal. User computing devices and terminals adapted to carry out these methods are also described.

## Description

### TECHNICAL FIELD

The present disclosure relates to a transaction selection mechanism. In embodiments, it relates to selection of a transaction card for use by a transaction device when multiple transaction cards are available for use.

### BACKGROUND

Payment cards such as credit cards and debit cards are very widely used for all forms of financial transaction. A typical payment card now contains an integrated circuit (making it a "chip card" or "smart card") which can be read by a smart card reader in a merchant POS (point of sale) terminal. Using this approach, a transaction is typically confirmed by a personal identification number (PIN) entered by the card user. Cards of this type typically operate under the EMV standard for interoperation of chip cards and associated apparatus (such as POS terminals and ATMs). ISO/IEC 7816 provides a standard for operation of cards of this type. Contactless payments are now possible between suitably enabled payment cards and merchant terminals by short range wireless technology using NFC protocols - under EMV, these are covered under the ISO/IEC 14443 standard. Payment cards and devices are provided under a transaction scheme (such as MasterCard, American Express or Visa) and the transaction mechanism is mediated by the transaction scheme infrastructure. EMV specifications relate to contact and contactless payment protocols and are publicly available at the EMVCo website (EMVCo is the industry body tasked with maintaining these specifications with the support of major transaction scheme providers) - https://www.emvco.com/document-search/ - and would readily be consulted by the person skilled in the art. Terminology relating to EMV technology not expressly defined in this document is referenced and defined in EMV specifications, as will be appreciated by the person skilled in the art.

Increasingly, transactions are made in a digital domain. Contactless payments may for example be performed by a mobile phone running a mobile payment application and communicating with a POS terminal using the same protocols as a contactless card. It is therefore now appropriate to refer to a "payment device" rather than a "payment card" (when one term is used below, it should be understood to extend to the other-"payment card" will generally be used for convenience). Typically, the payment application will be associated with a "digital wallet" containing details of one or more payment cards that may be used by the payment application. A user will typically be able to upload details of one or more payment cards to their digital wallet - generally this will involve a registration process involving the card issuer, where a payment card is included in the digital wallet after card issuer acceptance that the card can be digitised and added to the digital wallet. Such digitised cards are typically tokenised - the card number in a transaction is replaced by a token value, and the token is used to recover the real card number from a token vault during processing of a transaction. Where multiple cards are available to a user, card selection may create an additional burden for the user. Typically there will be a default card, or the payment application will default to the card last used - this may lead to the user using a card that they would not wish to use for a given transaction unless they always take care to avoid this result. It would be desirable to use a technically improved solution to avoid such issues and to improve the user experience.

### SUMMARY OF THE DISCLOSURE

According to a first aspect of the present disclosure there is provided a method of transaction selection for a transaction conducted between a user computing device adapted for use as a payment device and a terminal, wherein the user computing device supports a plurality of payment cards, comprises at the user computing device: establishing communication with the terminal; receiving transaction related information from the terminal; performing a card selection operation using the transaction related information to select a preferred payment card for performing the transaction; and identifying to the terminal preferred applications for performing the transaction based on the preferred payment card.

In embodiments, the transaction is a contactless transaction. The method may then be performed according to EMV protocols for entry point for a contactless transaction. In such a case, in response to a Select PPSE command from the terminal, the user computing device may respond with an FCI response indicating that it supports card selection using transaction related information. This FCI response may include a Data Object List indicating transaction related information required by the user computing device for card selection.

According to a second aspect of the present disclosure there is provided a method of card selection at a user computing device, wherein the user computing device is adapted for use as a payment device and supports a plurality of payment cards, the method comprising: obtaining user account information and transaction related information for a transaction; determining a preferred payment card for the transaction based on the user account information and the transaction related information; obtaining if provided a user preferred payment card from a user interface of the user computing device, and establishing a payment card for performing the transaction; and updating selection parameters for determining a preferred payment card from the determined and established payment cards for performing the transaction.

These selection parameters may be weightings within a neural network.

The transaction related information may comprise one or more of transaction amount, day of the week, country code, merchant type and merchant code. The user account information may comprise one or more of card balances and account restrictions associated with the payment cards supported by the user computing device.

The card selection operation in the method of transaction method selection of the first aspect may be performed using the method of card selection of the second aspect.

According to a third aspect of the present disclosure there is provided a user computing device comprising a processor, a memory, and means for establishing communication with a terminal of a tranaction system, wherein the user computing device supports a plurality of payment cards, wherein the user computing device is programmed to perform the method of either the first aspect of the disclosure, the second aspect of the disclosure, or both.

This user computing device may be a mobile phone.

According to a fourth aspect of the present disclosure there is provided a method of transaction selection for a transaction conducted between a user computing device adapted for use as a payment device and a terminal, wherein the user computing device supports a plurality of payment cards, wherein the method comprises at the terminal: establishing communication with the payment device; providing transaction related information to the payment device; receiving from the payment device an identification of preferred applications for performing the transaction based on a preferred payment card; and selecting an application for performing the transaction from the preferred applications.

This transaction may be a contactless transaction. In such a case, the method may be performed according to EMV protocols for entry point for a contactless transaction. The terminal may for example send a Select PPSE command, and in response to an FCI response indicating that it supports card selection using transaction related information, provide requested transaction related information.

According to a fifth aspect of the present disclosure there is provided a terminal comprising a processor, a memory, and means for establishing communication with a user computing device, wherein the terminal is programmed to perform the method of the fourth aspect of the disclosure.

### BRIEF DESCRIPTION OF THE DRAWINGS

One or more embodiments of the disclosure will now be described, by way of example only, with reference to the accompanying drawings, in which:
Figure 1 shows schematically a transaction system using the four-party model;
Figure 2 shows an implementation of the transaction system of Figure 1 adapted for performing embodiments of the disclosure;
Figure 3 shows elements of a transaction infrastructure to support digitised payments from a mobile device in more detail;
Figure 4 illustrates schematically elements of a mobile device in accordance with an embodiment of the disclosure;
Figure 5 shows functional steps in a general embodiment of the disclosure;
Figure 6 illustrates an application selection process in the arrangement of Figure 5;
Figures 7a and 7b illustrate the Application Selection and Exchange Transaction Data stages of a transaction using a conventional approach and the approach of embodiments of the disclosure respectively;
Figure 8 illustrates a process of obtaining card data for use in enhanced Application Selection;
Figure 9 indicates a supervised learning system used for card selection in embodiments of the disclosure;
Figure 10 indicates a typical general model of user card selection behaviour; and
Figure 11 shows typical prediction accuracy for a system of the type shown in Figure 9 for total number of transactions used by the system for learning purposes.

### DETAILED DESCRIPTION

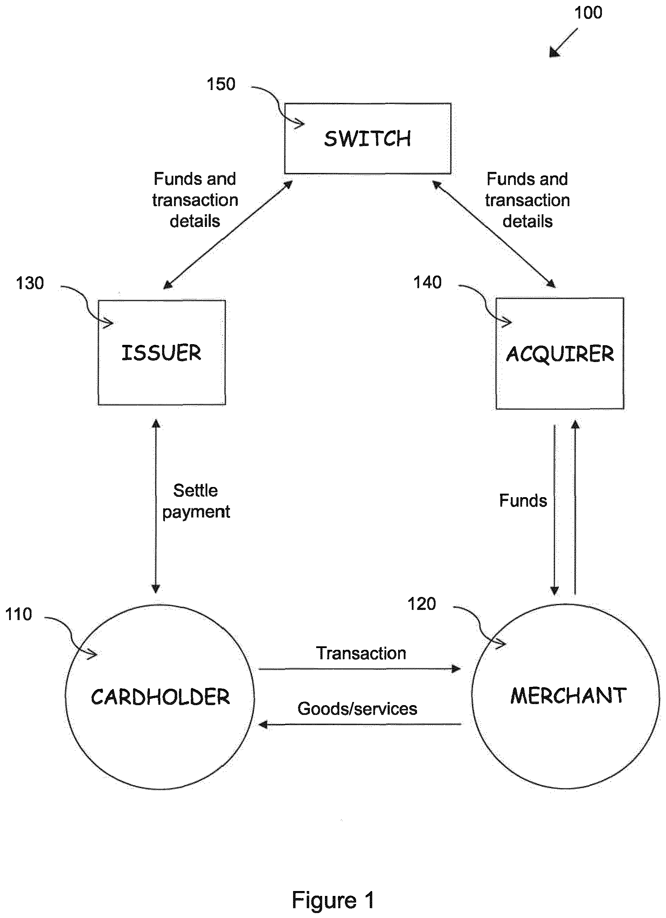

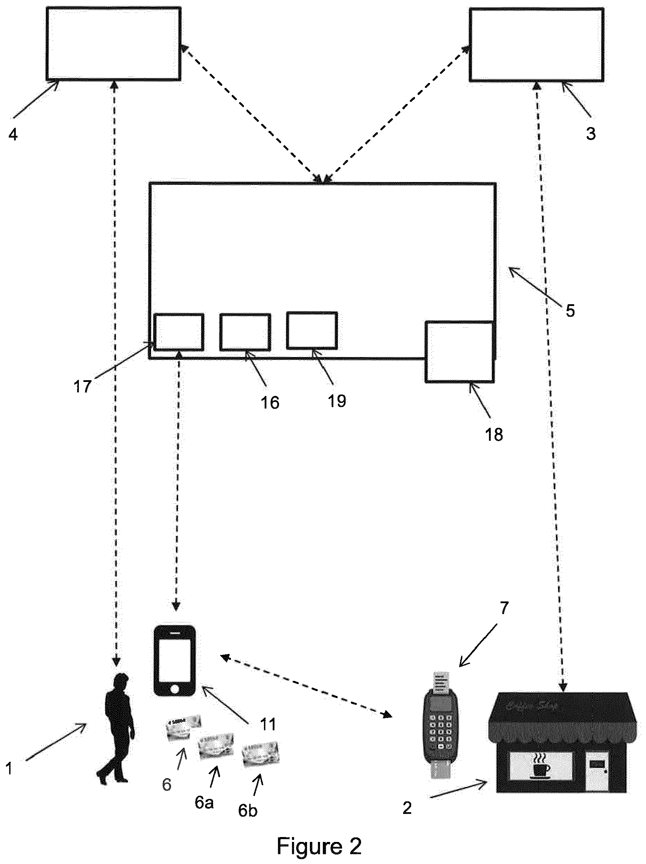

General and specific embodiments of the disclosure will be described below with reference to the Figures. General principles of a conventional transaction scheme are described with reference to Figure 1, with Figures 2 to 4 illustrating elements of a conventional transaction scheme implementation suitable for implementation of embodiments of the invention.

Figure 1 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity. Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

Figure 2 shows a transaction scheme architecture implementation - this is a conventional architecture, but suitable for use for implementation of embodiments of the invention.

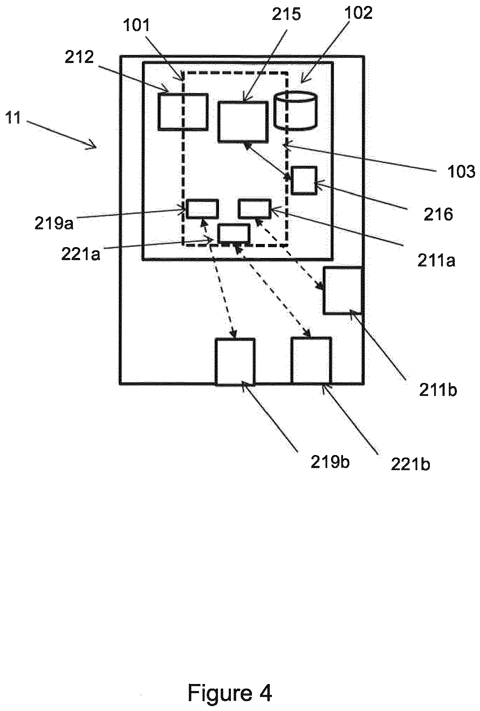

In a conventional transaction, a cardholder will use one of their payment cards 6, 6a, 6b to transact with a POS terminal 7 of a merchant 2. In embodiments of the disclosure, the cardholder will instead use a mobile computing device such as smartphone 11 adapted as a payment device - this may for example be able to make a contactless payment with the POS terminal 7 using one of the cardholder payment cards 6, 6a, 6b as held in digitised form in the digital wallet accessed by the payment application on the smartphone 11 (discussed further below with reference to Figure 4). The POS terminal 7 of the merchant will comprise a contactless card reader, and may also contain or be in communication with an electronic cash register of the merchant (not shown as a separate element in Figure 2).

In embodiments described below, the computing device may be another form of mobile computing device, such as a laptop or a tablet computer. The payment cards in the digital wallet may be physical payment cards, but may include one or more virtual payment cards operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. The payment application may be used in other transaction domains, such as online transactions with a merchant server.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenisation, a token service provider 19 is present (again, this is shown as part of transaction infrastructure 5 but may be provided by a third party with appropriate trust relationships), and the transaction scheme infrastructure provides a digital enablement service 16 to support the performance of tokenised digital transactions, and to interact with other elements of the system to allow transactions to be performed correctly - this digital enablement service may include other elements, such as token service provision.

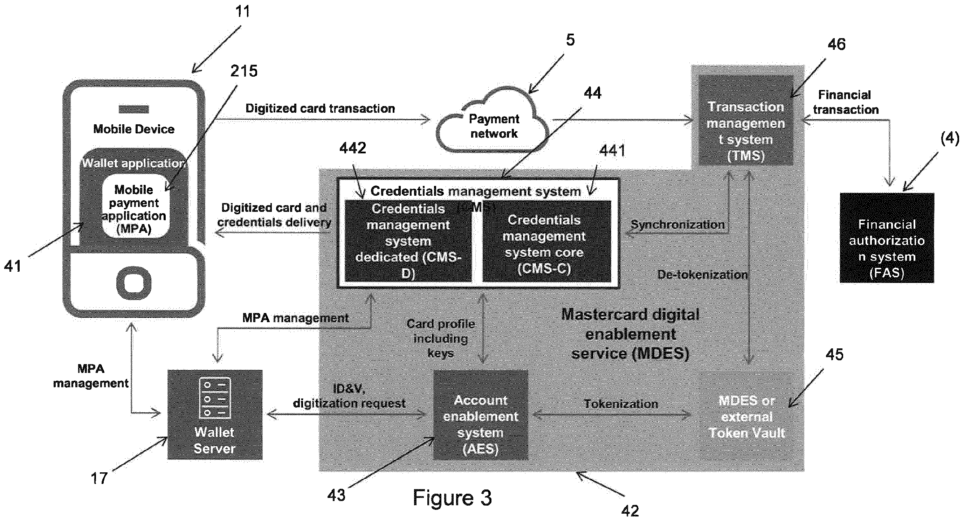

For a tokenised transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner. Figure 3 shows elements of a transaction infrastructure to support digitised payments from a mobile device in more detail. This Figure shows as a specific example the applicant's Mastercard Cloud Based Payment (MCBP) architecture - this is exemplary rather than specific to the invention, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenised transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitisation and user establishment. It will interact with the mobile payment application (here through the wallet server 17) for card digitisation requests, and will populate the Token Vault 45 on tokenisation and wil interact with the CMS 44 to establish a card profile with associated keys for digital use of the card.

The Credentials Management System (CMS) 44 supports management of cardholder credentials, and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application. The Token Vault 45 - which is shown here as within the MDES 42, but which may be a separate element under separate control - is the repository for token information including the correspondence between a token and the associated card. In processing tokenised transactions, the MDES 42 wll reference the Token Vault 45, and tokenisation of a card will result in creation of a new entry in the Token Vault 45.

Transaction Management System (TMS) 46 is used when processing tokenised transactions. If a transaction is identified by the transaction scheme as being tokenised, it is routed to the TMS 46 which detokenises the transaction by using the Token Vault 45. The detokenised transaction is then routed to the issuer (here represented by Financial Authorisation System 47) for authorisation in the conventional manner. The TMS 46 also interacts with the CMS 44 to ensure synchronisation in relation to the cardholder account and credentials.

Figure 4 illustrates schematically a mobile phone configured for implementing such an embodiment of the disclosure. The cardholder is equipped with one or more physical payment cards 6 and a computing device, in this case a mobile telephone 1. As shown in Figure 4, the computing device in this embodiment has a wireless communication capability 211 (shown as provided by a combination of NFC application software 211a and hardware 211b), here allowing the mobile computing device to communicate by NFC protocols and in embodiments also by 802.11 wireless networking technologies - this or another networking capability (such as cellular telephony capability 219 - shown as provided by a combination of a telephony application 219a and hardware 219b) may be used to communicate with remote computing devices over an appropriate network connection. The computing device has a processor 101 and a memory 102, between them defining a computing environment 103 in which applications can run. The computing device may also comprise a biometric input device 221b such as a fingerprint scanner with an associated biometric application 221a that can be used by other applications. In embodiments of the disclosure, these include a payment application 215 adapted to connect with communication channels to make payments - this may be embedded within a wallet application, or digital wallet, as shown in Figure 3. The payment application 215 is also connected to a cryptographic element 216 capable of performing cryptographic processes such as generation of a new cryptographic key. This cryptographic element may be physically and/or logically protected to prevent subversion - a mobile telephone SIM card is a cryptographic elements of this type. In other embodiments, the cryptographic element 216 may be a functionality provided by software of the mobile device (for example, its operating system or the payment application itself).

The disclosure relates to a transaction selection mechanism. Two aspects of transaction selection mechanism are discussed - each has independent benefit, but the two operate synergistically together. The first aspect relates to exchange of information between a payment device and a terminal prior to determination of a payment card for use by the payment device - in particular, to provision of merchant information. This is in contrast to conventional transaction systems, in which the initial exchange of information is only to establish the capabilities of the payment device and the terminal to negotiate a payment environment ("application selection" at the payment device). This payment environment includes the specific software used for the transaction at the payment device (where there may be more than one payment application available) and the terminal. The second aspect relates to determination of a default payment card for use in a transaction at the payment device.

In EMV protocols, this stage of a transaction process is governed by the Entry Point specification - the Entry Point specification for contactless transactions is found at https://www.emvco.com/terms-of-use/?u=/wp-content/uploads/documents/B_Entry_Point_Specification_v2_7_Final.pdf. This specification defines five main functional sections: preliminary transaction processing (also called pre-processing), which is processing prior to the activation of the contactless interface of the reader and before the cardholder is invited to present a contactless card; protocol activation, which is activation of the contactless interface; combination selection, which is selection of the combination to use for the transaction; kernel activation, where Entry Point activates the selected kernel and this begins kernel processing; and outcome processing, where Entry Point processes an outcome according to the type of outcome and the values of the outcome parameters.

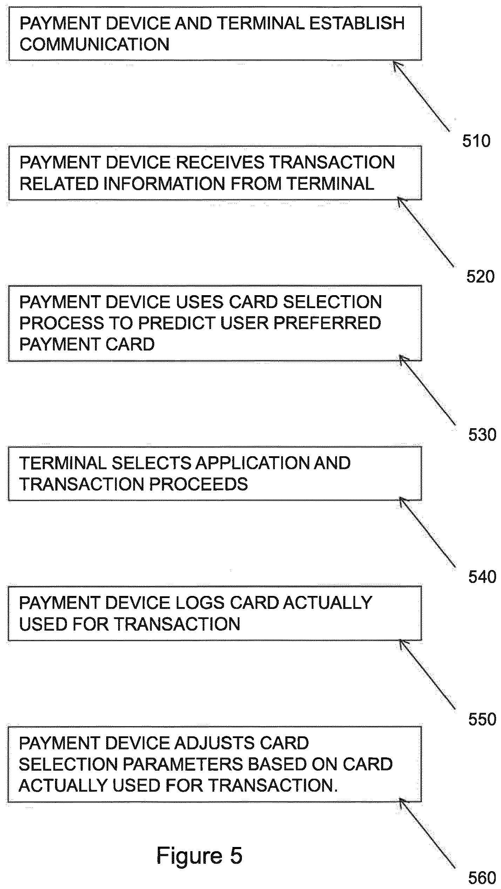

Figure 5 shows functional steps in a general embodiment of the disclosure involving both these aspects. A payment device 11 and a terminal 7 first establish communication 510 - in embodiments described below, this is in a contactless connection using NFC protocols, but other communication paths are possible in other embodiments. The payment device 11 then receives 520 transaction related information - such as merchant information - from the terminal 7. As noted below, this may take place through modification of a conventional application selection process for determining the elements of the payment environment. The payment device 11 then uses a card selection process to predict 530 from information including the transaction related information (such as merchant information, or transaction amount) a user preferred payment card for the transaction, and selects that payment card as a default card for the transaction. This determination of a default may be used in the application selection process - for example, by reordering a list of payment applications offered by the payment device or by changing entries in the list (for example, by removing from the selection options a payment application that would not support the user preferred card). Once a default payment card has been chosen and the application selected, the transaction proceeds 540 - in embodiments below, as a typical contactless transaction. The user may in embodiments be able to select a card other than the default card during the transaction, but the intention is that the ease of use for the cardholder will be improved because the default card will generally be selected correctly. This is achieved by machine learning at the card selection process - typically a final card selection result will be logged 550 with associated transaction-related information by the card selection process, and the final card selection result used to adjust 560 card selection parameters for one or more of the payment cards usable by the payment device 11.

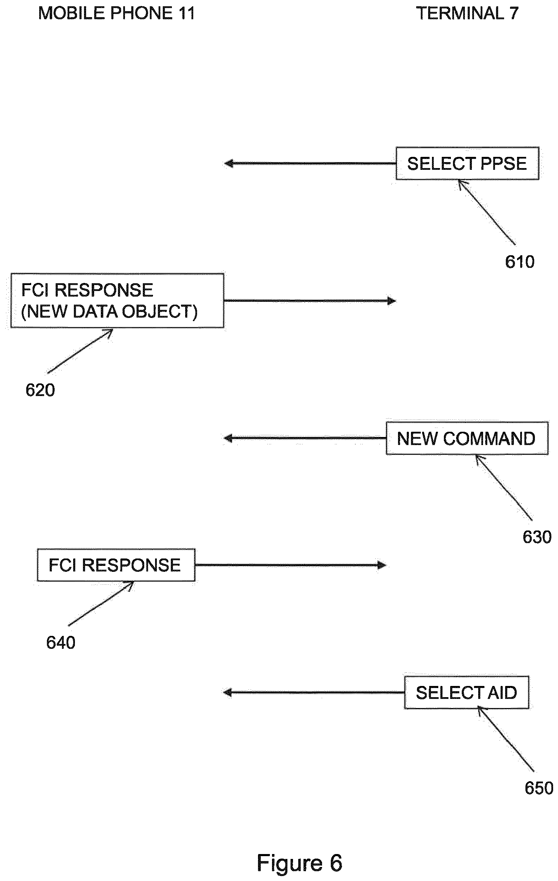

Figure 6 shows in more detail an application selection process that may be used in the approach shown in Figure 5. The steps in a conventional EMV transaction are as follows. After card detection by the terminal, the next process is application selection - this determines the EMV application that will be used to process the transaction, which must be supported by both the terminal and the card (in this case, the device). The general application selection process is standardised under ISO/IEC 7816, and described further in EMV standards documents. Applications are identified by an Application Identifier (AID). The terminal has a list of AIDs that it supports, and it requests a listing of AIDs supported by the card with a "Select PPSE" command (in the case of a contactless transaction) - these may be provided as a list, with preferences - in aFCI (File Control Information) response. Iteration is possible, the process ending with selection of an AID by the terminal from the available choices. The transaction then continues using the agreed application with an exchange of data between the card and the terminal - the details of this and subsequent transaction processes are not significant for the present disclosure, but may be seen from the references cited above.

In this approach, the card does not receive any information related to possible application choices before the AID is selected. Different card types (credit, debit, prepaid,...) will be associated with different AIDs, so the application choice may not be suitable for a card that a user would wish to use for a specific transaction - this would require inconvenient positive user interventions to address (such as a positive card selection step before even initiating the transaction). In embodiments of the disclosure, the conventional approach to application selection is modified to support an exchange of information during application selection which allows such user preferences to be considered, as is shown in Figure 6.

This modified approach begins with a Select PPSE command 610 from the terminal as normal. The response to the command however contains additional options to allow for enhanced application selection at the card. This may be done by including a new type of data object in the FCI response 620 made to the Select PPSE command 610. Absence of such a data object will indicate to the terminal that enhanced application selection is not required (i.e. it is not supported by the card), and application selection will continue in the conventional way.

The new type of data object may be a specific Data Object List (DOL) 625, as shown in the embodiment depicted in Figure 6. DOLs are used in existing EMV protocols, but providing a DOL in this way in an FCI response to a Select PPSE command is a modification to existing Application Selection. The DOL 625 indicates the data objects the card wants to receive in the subsequent command. There is a practical difficulty with this approach, as these data objects are likely to contain information that can be provided in a number of different ways (for example, according to different conventions used by different transaction schemes), and at this point it has not been established what transaction scheme is to be used. This is addressed by including in the DOL information either defining or requesting the convention used for the values of the data objects to be sent in response - the convention may in different cases be set by the card or the terminal. Variations to this approach are possible - for example, the FCI response may indicate that enhanced application selection is supported, but not provide a DOL - in this case, the terminal may provide a default DOL response.

Various approaches are possible to the establishment of a convention In one approach, one of the DOL elements (a combination of Tag and Length) indicates the convention for the values as they will be returned in the subsequent command. In this case, the card allows the terminal to set the convention for the data objects and inform the card of its convention through the value of this data element.

Using this approach, the terminal sends an additional command 630 if one or more of these new data objects are included in the FCI and this new command includes the data objects indicated by the DOL (or a default set). If none of the new data objects are present in the FCI, then this is the final FCI and terminal continues with current application selection and does not send an extra command.

The advantage of this approach is that it allows the terminal to provide information that can be used by the card to determine which card (and hence what application) would be preferred for the transaction. For example, the data objects may include a merchant identifier or indication of merchant type - for example, this may indicate that the transaction is a purchase of fuel, or a travel ticket, and these may be associated with a particular card in the user's card collection. The card may thus use the information in the new command 630 from the terminal to adjust its list of supported applications and/or their respective priorities. This allows a preferred card choice to match the applications and priorities provided by the card in a further FCI response 640.

In some cases, this new FCI 640 may again include one or more data objects as described above, allowing the card to request additional data in subsequent commands to further refine its selection. Absence of this data indicates to the terminal that this is the final FCI from the card and that the terminal can move to the next step of application selection.

The final FCI is then used by the terminal to select the mutually supported application with the highest priority using a Select AID command 650.

The approach described in Figure 6 allows user card preferences to be used to establish application selection to favour a default card (or a preference order of cards). The following section describes how such user card preferences may be reflected in a card selection process. In a preferred approach, a default card or a preference order of cards is established by machine learning based from past knowledge of user card selection in transactions with some measure of comparability to the transaction at issue - which is why merchant information (and potentially other information from the terminal) is obtained during application selection, as it is typically a main element relevant to user preference.

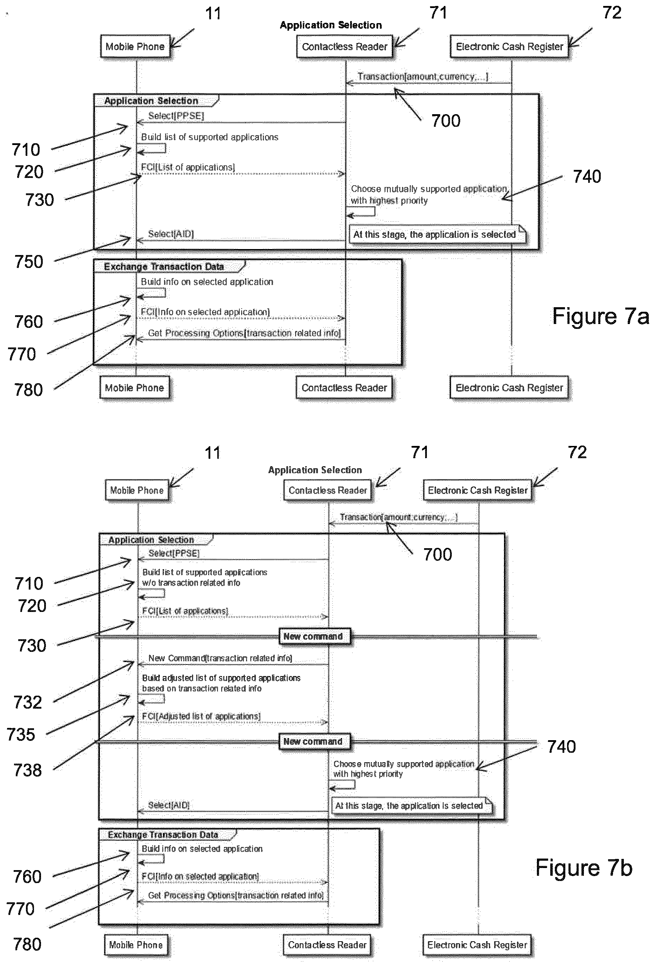

Figures 7a and 7b illustrate in more detail the Application Selection and Exchange Transaction Data stages of a transaction using a conventional approach and the approach of embodiments of the disclosure respectively. In the conventional process of Figure 7a, the first step is for the electronic cash register 72 of the merchant to communicate with the contactless reader 71 (as stated before, the contactless reader 71 will be within POS terminal 7, whereas the electronic cash register 72 may be in separate computing apparatus) to provide 700 details of a potential contactless transaction. The contactless reader 71 provides a Select PPSE command 710 to the mobile phone 11, which builds 720 a list of supported applications and provides this to the contactless reader 71 in an FCI response 730. The contactless reader 71 chooses 740 the mutually supported application with the highest priority - at this stage the application has been selected - and communicates this to the mobile phone 11 with a Select AID command 750. Transaction data is then exchanged - the mobile phone builds information 760 needed by the terminal, provides it in an FCI response 770, and then receives a Get Processing Options command 780 from the contactless reader 71 containing transaction information. This is the first point at which the mobile phone 11 receives transaction related information (such as merchant information) under current contactless protocols.

Figure 7b shows the approach to be used in embodiments of the disclosure. The communicating system elements are the same, and the process begins in the same way, including an initial Select PPSE command 710 to the mobile phone 11. However, in this case, the initial FCI response 730 indicates that enhanced operation selection is available. This enables the contactless reader 71 to respond with a new command 732 providing relevant transaction information - which may here include merchant type and transaction amount - which can be used by the mobile phone 11 to adjust 735 its list of applications as described above. The mobile phone 11 can then communicate this adjusted list in an additional FCI response 738. As discussed above, these new process steps may be repeated, but when concluded, the contactless reader 72 simply selects the preferred mutually supported application 740 and the process continues as before.

In embodiments, where the card uses information from the terminal and other information that it possesses to propose an application to the cardholder and adjust its list of supported application and/or priorities based on the cardholder input/feedback. In one model, the information may include transaction amount and merchant type (which may, and will, be information fed back from the terminal respectively) and also transaction type. Other information needed - such as balances held on different cards - may be maintained at the device. Potentially other information such as device location (which could be obtained from cellphone network information or GPS, for example) could also be used. A practical set of information used for exemplary implementations of the disclosure is the following: transaction amount; country code; day of the week; merchant type; merchant name; and card balances for each relevant card (including minimum and maximum available spend values on each card).

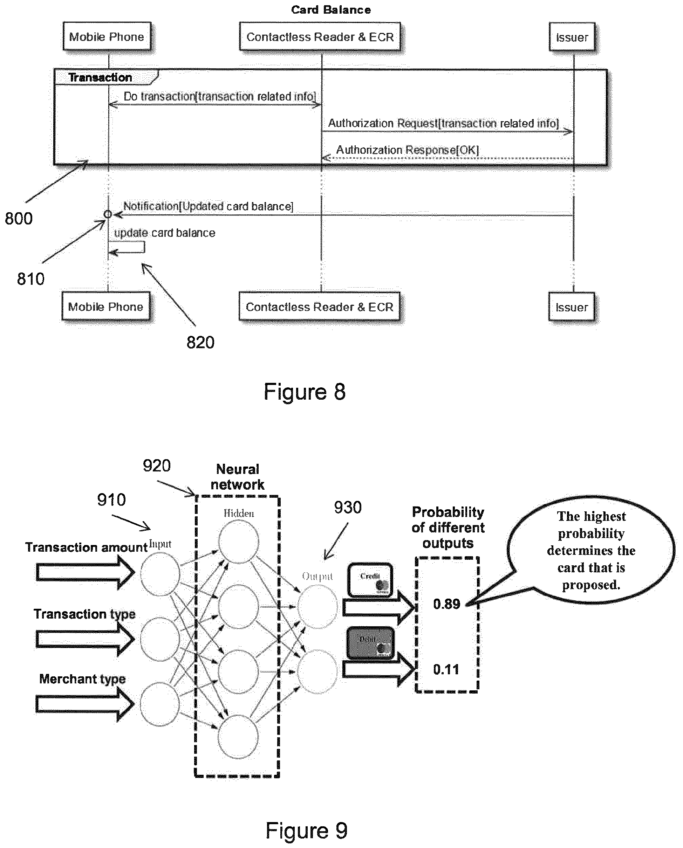

Figure 8 illustrates a process of obtaining card data for use in enhanced Application Selection. Once a transaction completes 800, there is a separate notification step 810 where the Issuer notifies the cardholder (typically by communication with the digital wallet application on the user mobile phone) of the transaction and/or the resulting balance so that card balance information can be maintained 820 on the phone.

In embodiments, the cardholder input or feedback, in combination with card status and merchant data (and any other information used), is used as input for a linear classifier to learn the customer preference. The linear classifier is used to identify a preferred card, or to provide a card preference order, thereby also determining an adjusted list of supported applications corresponding to this card preference information.

Operation of the linear classifier is described in more detail with reference to Figures 9 to 11. Figure 9 indicates schematically a supervised learning system used for card selection in embodiments of the disclosure. Supervised learning is a form of artificial intelligence - input and output data, are used to provide a learning basis for future classification. This will be carried out by a card selection application, typically located in or associated with the digital wallet on the user mobile phone, that uses a neural network 920 to learn from the inputs 910 (shown here as comprising transaction amount, transaction type and merchant type) which of the various outputs 930 (in this case, the different payment card options) will be preferred. The outputs 930 are provided as probabilities for each card that it is the card that the user wants to select - the system learns by comparing this against an actual user selection. Typically, the highest probability card according to the classifier assessment - in the case shown in Figure 9, the credit card - is proposed to the user as a default for selection, with the actual choice taken by the user used to train the neural network 920.

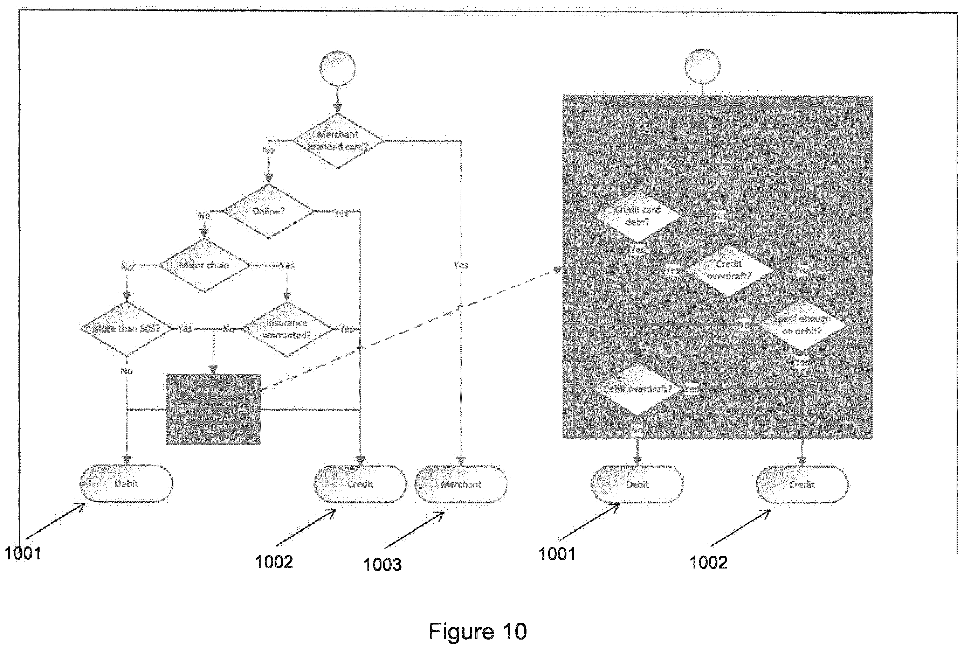

Figure 10 indicates a typical general model of user card preference - in this case, the user chooses between a debit card 1001, a credit card 1002 and a merchant branded card 1003 (for use with that merchant). This model could be hard-coded in the wallet software but as cards are added or removed or as cardholder preference evolves, the code would need to be updated by the wallet provider to the individual preference of the cardholder. This example is not a scalable model, buta scalable approach may be achieved where the local wallet application learns based on merchant information and card status. In this case, merchant information includes the merchant name (to determine whether the user has a merchant branded card matching the merchant of the current transaction) and the type of merchant. This is then combined with the card balances to, as shown in Figure 10, result in use of the merchant card, the debit card 1001 or the credit card 1002.

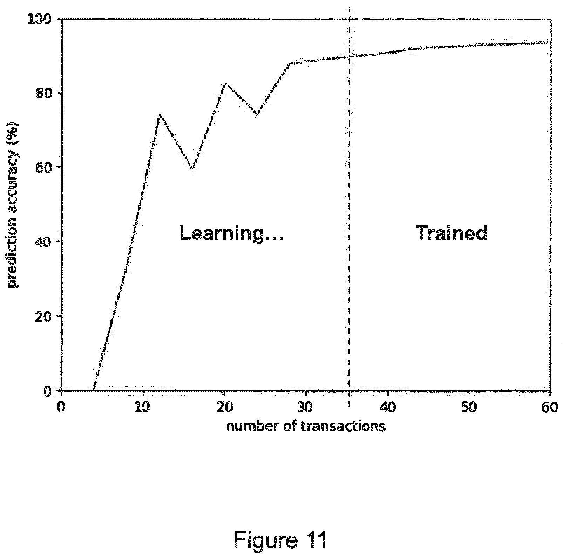

Figure 11 shows typical prediction accuracy for a system of the type shown in Figure 9 for total number of transactions used by the system for learning purposes. The system will have no inherent ability to predict (for lack of actual user data) for the first few transactions, then prediction ability will improve significantly, typically with a few downward steps for correction after inaccurate predictions. Evaluation suggests that after a certain number of transactions the cardholder profile has been learned by the card selection system sufficiently well to achieve 90+% card selection accuracy. Figure 11 shows a worked example using a user's credit and debit card, along with a corporate card used for business transactions and a merchant reward card. In this case, the desired accuracy level is achieved between 30 and 40 transactions.

Although there can be seen from the above to be a beneficial result in using an enhanced Application Selection process in which information can be fed back to the card together with a card selection process for predicting which card the user will wish to use, the two processes may be used independently to achieve beneficial results. Enhanced Application Selection, even if not used for card selection, may be beneficial for other purposes (it may for example be used to block performance of a transaction if the merchant information provided suggests that the merchant is not legitimate). A card selection process may be chosen which does not incorporate information provided by the merchant.

Many modifications may be made to the above examples without departing from the scope of the present disclosure as defined in the accompanying claims. As the skilled person will appreciate, the scope of the disclosure is not limited to the embodiments described above - the skilled person will appreciate that other embodiments may be devised according to the teaching provided here that also fall within the scope of the disclosure as claimed.

## Claims

1. A method of transaction selection for a transaction conducted between a user computing device adapted for use as a payment device and a terminal, wherein the user computing device supports a plurality of payment cards, comprises at the user computing device:
establishing communication with the terminal;
receiving transaction related information from the terminal;
performing a card selection operation using the transaction related information to select a preferred payment card for performing the transaction; and
identifying to the terminal preferred applications for performing the transaction based on the preferred payment card.

2. The method as claimed in claim 1, wherein the transaction is a contactless transaction.

3. The method as claimed in claim 2, wherein the method is performed according to EMV protocols for entry point for a contactless transaction.

4. The method according to claim 3, wherein in response to a Select PPSE command from the terminal, the user computing device responds with an FCI response indicating that it supports card selection using transaction related information, and wherein the FCI response includes a Data Object List indicating transaction related information required by the user computing device for card selection.

5. A method of card selection at a user computing device, wherein the user computing device is adapted for use as a payment device and supports a plurality of payment cards, the method comprising:
obtaining user account information and transaction related information for a transaction;
determining a preferred payment card for the transaction based on the user account information and the transaction related information;
obtaining if provided a user preferred payment card from a user interface of the user computing device, and establishing a payment card for performing the transaction; and
updating selection parameters for determining a preferred payment card from the determined and established payment cards for performing the transaction.

6. The method as claimed in claim 5, wherein the selection parameters are weightings within a neural network.

7. The method as claimed in claim 5 or claim 6, wherein the transaction related information comprises one or more of transaction amount, day of the week, country code, merchant type and merchant code, and wherein the user account information comprises one or more of card balances and account restrictions associated with the payment cards supported by the user computing device.

8. The method of any of claims 1 to 4, wherein the card selection operation is performed using the method of card selection of any of claims 5 to 7.

9. A user computing device comprising a processor, a memory, and means for establishing communication with a terminal of a transaction system, wherein the user computing device supports a plurality of payment cards, wherein the user computing device is programmed to perform the method of any of claims 1 to 7.

10. The user computing device of claim 9, wherein the user computing device is a mobile phone.

11. A method of transaction selection for a transaction conducted between a user computing device adapted for use as a payment device and a terminal, wherein the user computing device supports a plurality of payment cards, wherein the method comprises at the terminal:
establishing communication with the payment device;
providing transaction related information to the payment device;
receiving from the payment device an identification of preferred applications for performing the transaction based on a preferred payment card; and
selecting an application for performing the transaction from the preferred applications.

12. The method as claimed in claim 11, wherein the transaction is a contactless transaction.

13. The method as claimed in claim 12, wherein the method is performed according to EMV protocols for entry point for a contactless transaction.

14. The method according to claim 13, wherein the terminal sends a Select PPSE command and in response to an FCI response indicating that it supports card selection using transaction related information, provides requested transaction related information.

15. A terminal comprising a processor, a memory, and means for establishing communication with a user computing device, wherein the terminal is programmed to perform the method of claims 11 to 14.
